# EUROPÄISCHE PATENTSCHRIFT

(11) **EP 1 577 162 B1**
(45) Veröffentlichungstag und Bekanntmachung des Hinweises auf die Patenterteilung: **20.07.2011**
(21) Anmeldenummer: 04028286.5
(22) Anmeldetag: 30.11.2004
(51) Int. Cl.: B60Q 1/26, B60K 11/08

(54) **Kraftfahrzeug mit Leuchte in Kühlluftöffnung**
Vehicle with light inside cooling opening
Véhicule avec une lampe dans une entrée d'air

(30) Priorität: 20.03.2004 DE 102004013775
(43) Veröffentlichungstag der Anmeldung: 21.09.2005
(73) Patentinhaber: Dr. Ing. h.c. F. Porsche AG, 70435 Stuttgart (DE)
(72) Erfinder: Larson, Grant, 71642 Ludwigsburg (DE); Würfel, Manfred, 71229 Leonberg (DE); Eberhardt, Stefan, 71522 Backnang (DE); Peters, Oliver, 75446 Wiernsheim (DE); Scheepers, Stef, 71297 Moensheim (DE)

(56) Entgegenhaltungen:
- DE-U- 7 239 065
- DE-U1- 7 716 386
- JP-A- 4 232 138
- JP-A- 7 201 209
- JP-A- 2001 105 966
- US-A- 5 798 691
- US-A1- 2003 188 902

## Beschreibung

Die Erfindung betrifft ein Kraftfahrzeug, insbesondere Personenkraftwagen, mit einer einen Endbereich des Kraftfahrzeuges bildenden Verkleidung, an der zumindest eine Kühlluftöffnung und eine Leuchte bzw. eine Leuchteneinheit vorgesehen ist, wobei an der zumindest einen Kühlluftöffnung wenigstens eine langgestreckte Rippe angeordnet ist.

Aus der DE 33 38 466 C2 geht ein gattungsgemäßer Personenkraftwagen mit einer einen Bugendbereich bildenden elastischen Verkleidung hervor, an der zumindest eine Kühlluftöffnung und eine Leuchte bzw. eine Leuchteneinheit vorgesehen sind, wobei an der zumindest einen Kühlluftöffnung wenigstens eine langgestreckte Rippe angeordnet ist. Die zumindest eine Leuchte bzw. Leuchteneinheit ist bei dieser Anordnung getrennt von den Kühlluftöffnungen an einem flächigen Abschnitt der Verkleidung vorgesehen. Zur Unterbringung der Leuchte bzw. der Leuchteneinheit sind deshalb an der Verkleidung separate nischenförmige Aufnahmen vorgesehen, zu deren Herstellung im Werkzeug jeweils ein zusätzlicher kostenintensiver Schieber benötigt wird.

JP07-201209, JP2001-105966 und US 5798691 zeigen weitere Verkleidungen für Kraftfahrzeuge, anden zumindest eine Kühlluftöffnung und eine Leuchte bzw. eine Leuchteneinheit vorgesehen sind.

Aufgabe der Erfindung ist es, eine Leuchte bzw. eine Leuchteneinheit so an der Verkleidung anzuordnen, dass auf kostenintensive zusätzliche Schieber im Werkzeug verzichtet werden kann.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Anordnung der Leuchte bzw. der Leuchteneinheit innerhalb der zumindest einen Kühlluftöffnung und deren Befestigung an einer sich innerhalb der Kühlluftöffnung erstreckenden Rippe eine kostengünstige Anbringung der Leuchte bzw. Leuchteneinheit an der Verkleidung erzielt wird, da auf zusätzliche Schieber für die Leuchtenaufnahme verzichtet werden kann. Darüber hinaus wird die Anzahl der Durchbrüche in den flächigen Bereichen der Verkleidung verringert. Durch die Anpassung der Leuchte bzw. der Leuchteneinheit an die Querschnittsform der angrenzenden Rippe wird das optische Erscheinungsbild der Verkleidung optimiert. Die Leuchte bzw. Leuchteneinheit ist durch eine Steck- und Schraubverbindung in einfacher Weise an der Verkleidung befestigt. Da die Leuchte bzw. Leuchteneinheit zur Außenseite hin mit einem nach innen gerichteten Einzug versehen ist, erscheint die Leuchte bzw. Leuchteneinheit freitragend innerhalb der Kühllufteintrittsöffnung angeordnet. Die Leuchte bzw. Leuchteneinheit umfasst im Ausführungsbeispiel ein Blinklicht und/oder ein Positionslicht. Durch die LED-Technik für das Blinklicht kann dieses relativ klein bauen (weniger Bautiefe erforderlich).

Die vordere Begrenzungskante der Leuchte bzw. der Leuchteneinheit ist in der Draufsicht gesehen so gestaltet, dass sie gegenüber der Kontur der angrenzenden Verkleidung geringfügig vorsteht. Dadurch rückt der erste Berührungspunkt des Pendels bei einem 30° Pendelschlag gemäß USA-PART 581 bzw. CMVSS215 nach innen und liegt im Bereich der Leuchte bzw. Leuchteneinheit. Bei einem Pendelschlag wird dadurch der relativ weit innenliegende Stoßfängerträger getroffen, die Funktion der Leuchte bzw. der Leuchteneinheit und eines Hauptscheinwerfers bleibt bei einem Pendelschlag erhalten und der in einem seitlich außenliegenden Bereich mit Abstand zur Verkleidung angeordnete Kühler wird durch das Pendel nicht beschädigt.

In der Zeichnung ist ein Ausführungsbeispiel der Erfindung dargestellt.

Es zeigt
- Fig. 1: eine Teilansicht von vorne auf den Bugbereich eines Kraftfahrzeugs,
- Fig. 2: eine Einzelheit X der Fig. 1 in größerer Darstellung,
- Fig. 3: einen Schnitt nach der Linie III-III der Fig. 2 in größerer Darstellung,
- Fig. 4: einen Schnitt nach der Linie IV-IV der Fig. 3,
- Fig. 5: einen Schnitt nach der Linie V-V der Fig. 2 in größerer Darstellung,
- Fig. 6: einen Schnitt nach der Linie VI-VI der Fig. 2 in größerer Darstellung.

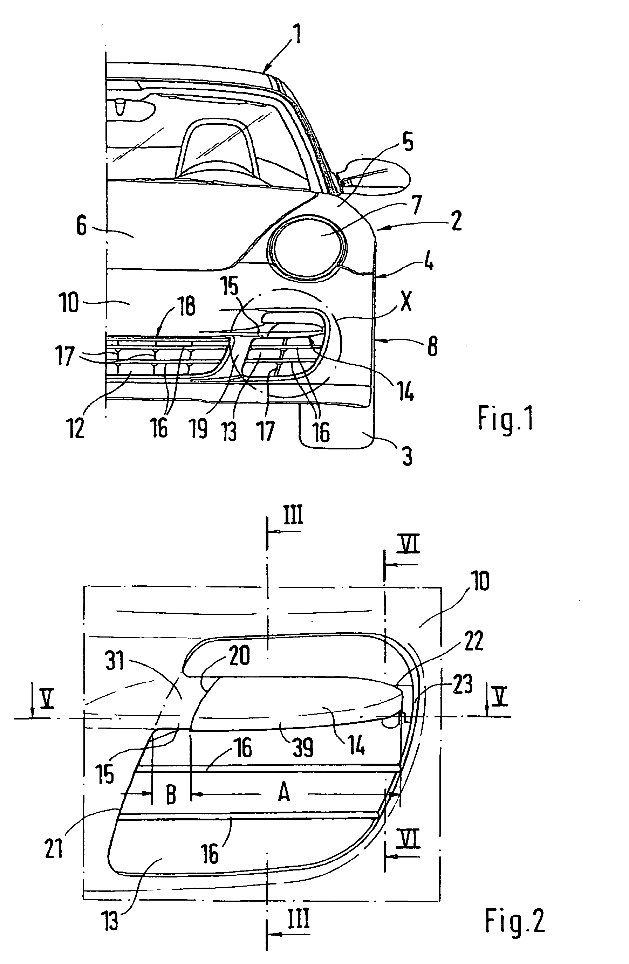

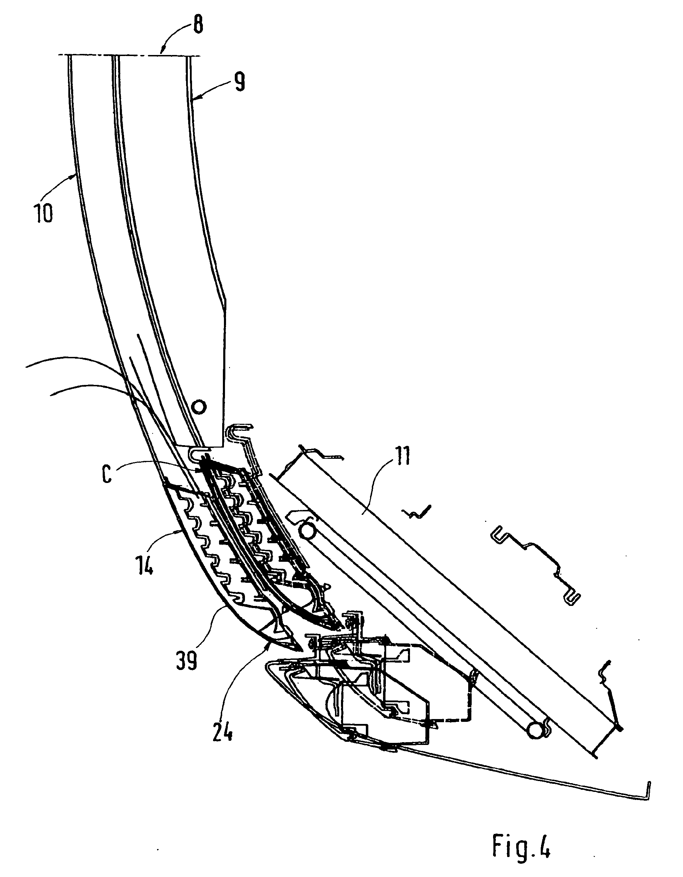

Das durch einen Personenkraftwagen gebildete Kraftfahrzeug 1 weist in dem dargestellten Bugbereich 2 Räder 3 und einen Aufbau 4 auf. Der Aufbau 4 umfasst ein vorderes Seitenteil 5, eine Haube 6, einen Scheinwerfer 7 und einen Stoßfänger 8. Der Stoßfänger 8 setzt sich aus einem querverlaufenden aufbauseitig abgestützten formsteifen Träger 9 und einer elastischen, den Endbereich des Aufbaus 4 bildenden Verkleidung 10 zusammen. In Fig. 1 ist lediglich die rechte Fahrzeughälfte dargestellt. Die linke Fahrzeughälfte ist spiegelbildlich zur rechten Fahrzeughälfte ausgebildet. Wegen eines seitlich außenliegenden, schrägverlaufenden Kühlers 11 endet der formsteife Träger 9 relativ weit innen (Fig. 4). Die formbeständige, jedoch elastische Verkleidung 10 weist zumindest eine Kühlluftöffnung 12, 13 sowie zumindest eine Leuchte bzw. Leuchteneinheit 14 auf, wobei an der zumindest einen Kühlluftöffnung 12, 13 wenigstens eine langgestreckte Rippe 15 vorgesehen ist.

Erfindungsgemäß ist die Leuchte bzw. Leuchteneinheit 14 innerhalb der zumindest einen Kühlluftöffnung 12, 13 der Verkleidung 10 vorgesehen und an einer sich innerhalb der Kühlluftöffnung 12, 13 erstreckenden Rippe 15 befestigt.

Gemäß Fig. 1 weist die Verkleidung 10 eine mittige Kühlluftöffnung 12 und seitlich außenliegende Kühlluftöffnungen 13 auf, wobei innerhalb der seitlich außenliegenden Kühlluftöffnungen 13 jeweils eine Leuchte bzw. eine Leuchteneinheit 14 angeordnet ist. Die Kühlluftöffnungen 12, 13 bilden im Ausführungsbeispiel Lufteinlässe für dahinterliegende Kühler.

In Fig. 2 ist lediglich eine seitlich außenliegende Kühlluftöffnung 13 dargestellt. Die Leuchte bzw. die Leuchteneinheit 14 ist lediglich in einem Teilbereich A der Längserstreckung der Rippe 15 angeordnet. Die Rippe 15 ist dem Formverlauf der Leuchte bzw. der Leuchteneinheit 14 angepasst. Im Ausführungsbeispiel erstreckt sich die die Leuchte bzw. Leuchteneinheit 14 aufnehmende Rippe 15 in Fahrzeugquerrichtung und ist etwa horizontal ausgerichtet. An jeder Kühlluftöffnung 12, 13 sind jeweils mehrere übereinanderliegend angeordnete Rippen 15, 16 sowie aufrechte Rippen 17 vorgesehen. Die Rippen 16 weisen einen flachen stegartigen Querschnitt auf, wogegen die Rippe 15 im Querschnitt gesehen einen geschlossenen Hohlkörper bildet. Die Rippe 15 verläuft in Höhenrichtung gesehen etwas oberhalb eines oberen Randes 18 der mittigen Kühlluftöffnung 12. Zwischen den benachbarten Kühlluftöffnungen 12, 13 erstreckt sich ein schmaler aufrechter Steg 19 der Verkleidung 10 (Fig. 1).

Ein innenliegendes Ende 20 der Leuchte bzw. Leuchteneinheit 14 verläuft mit Abstand B zum angrenzenden seitlichen Rand 21 der Kühlluftöffnung 13, wogegen das äußere Ende 22 der Leuchteneinheit 14 relativ nahe an den äußeren Rand 23 der Kühlluftöffnung 13 herangeführt ist (Fig. 2).

Die Leuchte bzw. Leuchteneinheit 14 weist - in der Draufsicht gesehen - an ihrem außenliegenden Ende 22 einen nach innen gerichteten Einzug 24 gegenüber der Kontur der Verkleidung 10 auf. Beim Anblick von vorne erscheint die Leuchte bzw. die Leuchteneinheit 14 freischwebend im Lufteinlass der Verkleidung 10.

Die elastische Verkleidung 10 aus einem geeigneten Kunststoff oder Schaum besteht aus einem einstückigen Außenteil 25 und einem inneren Halterahmen 26, wobei das Außenteil 25 und der Halterahmen 26 örtlich über nicht näher dargestellte Klipsverbindungen miteinander verbunden sind. Das Außenteil 25 und der innere Halterahmen 26 können ein- oder mehrteilig ausgebildet sein.

Die Leuchte bzw. die Leuchteneinheit 14 umfasst im Ausführungsbeispiel ein Blinklicht 27 und/oder ein Positionslicht 28. Das Blinklicht 27 ist vorzugsweise in LED-Technik ausgeführt und umfasst mehrere nebeneinanderliegend angeordnete LED's. Die LED-Technik erfordert weniger Bauraum (Bautiefe) als eine herkömmliche Technik (Glühlampe).

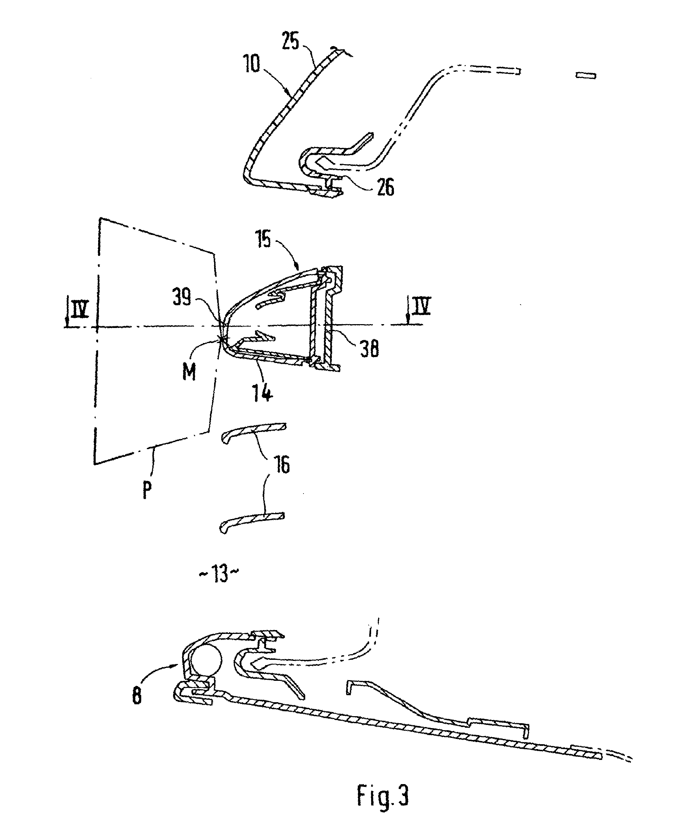

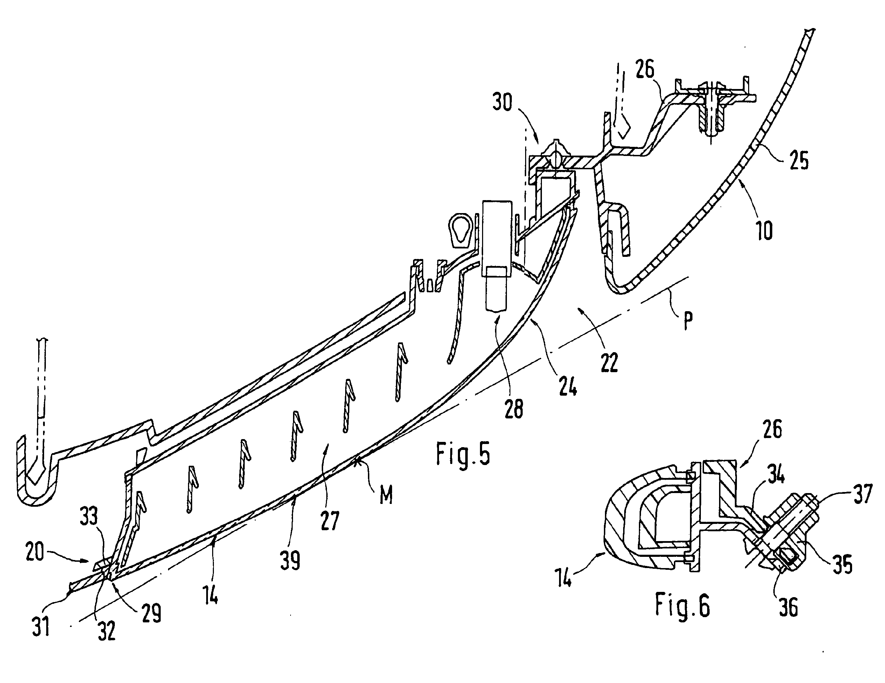

Die Leuchte bzw. die Leuchteneinheit 14 ist über eine Steckverbindung 29 und eine Schraubverbindung 30 an der Verkleidung 10 bzw. am Halterahmen 26 befestigt. Das innenliegende Ende 20 der Leuchte bzw. der Leuchteneinheit 14 ist über eine Steckverbindung 29 an den angrenzenden angeformten Rippenabschnitt 31 des Außenteils 25 angeschlossen und zwar konturbündig. Ein randseitiger Flansch 32 des Rippenabschnitts ragt in eine korrespondierende Aufnahme 33 der Leuchte bzw. der Leuchteneinheit 14 hinein. Das außenliegende Ende 22 der Leuchte bzw. der Leuchteneinheit 14 ist über eine Schraubverbindung 30 am inneren Halterahmen 26 in Lage gehalten. Gemäß Fig. 6 ist auf einen abgestellten Halteflansch 34 des inneren Halterahmens 26 eine Steckmutter 35, eine Blechmutter oder dgl. aufgeschoben, die den Halteflansch 34 beidseitig umgreift. Ein abgewinkelter Befestigungssteg 36 der Leuchte bzw. der Leuchteneinheit 14 liegt auf einem Kopfabschnitt der Steckmutter 35 bzw. der Blechmutter, auf und wird durch eine in die Steckmutter 35 bzw. Blechmutter eingedrehte Schraube 37 gegen den Halterahmen 26 gespannt. Zwischen den beiden endseitigen Befestigungen 29, 30 liegt die Leuchte bzw. die Leuchteneinheit 14 örtlich an einem aufrechten profilierten Steg 38 des inneren Halterahmens 26 auf (Fig. 3). Der aufrechte Steg 38 weist örtlich Durchführöffnungen für das Positionslicht 28, eine Kabeltülle und ein Entlüftelement auf.

Eine vordere Begrenzungskante 39 der Leuchte bzw. Leuchteneinheit 14 steht - in der Draufsicht gesehen - gegenüber der angrenzenden Kontur der Verkleidung 10 geringfügig vor, wodurch bei einem 30° Pendelschlag der erste Berührungspunkt M des Pendels P nach innen im Bereich der Leuchte bzw. der Leuchteneinheit 14 wandert. Dadurch wird bei einem 30° Pendelschlag der innenliegende Stoßfängerträger 9 getroffen, die Funktion der Leuchte bzw. der Leuchteneinheit und eines nicht näher dargestellten Hauptscheinwerfers bleibt bei einem Pendelschlag erhalten und der im seitlich außenliegenden Bereich mit Abstand zur Verkleidung 10 angeordnete Kühler bleibt bei einem Pendelschlag unbeschädigt. In Fig. 4 ist die Stellung C der Leuchteneinheit 14 nach einem Pendelschlag gestrichelt dargestellt.

## Patentansprüche

1. Kraftfahrzeug, insbesondere Personenkraftwagen, mit einer den Endbereich des Kraftfahrzeuges bildenden elastischen Verkleidung (10), an der zumindest eine Kühlluftöffnung (13) und eine Leuchte bzw. eine Leuchteneinheit (14) vorgesehen sind, wobei an der zumindest einen Kühlluftöffnung wenigstens eine langgestreckte Rippe (15) angeordnet ist, **dadurch gekennzeichnet, dass** die Leuchte bzw. die Leuchteneinheit (14) innerhalb einer seitlich außenliegenden Kühlluftöffnung (13) der Verkleidung (10) angeordnet und an der sich innerhalb der Kühlluftöffnung (13) erstreckenden in Fahrzeugquerrichtung verlaufenden Rippe (15) befestigt ist, wobei die Leuchte bzw. die Leuchteneinheit (14) lediglich in einem Teilbereich (A) der Längserstreckung der Rippe (15) angeordnet ist und die Leuchte bzw. Leuchteneinheit (14) der Querschnittsform bzw. dem Formverlauf der angrenzenden Rippe (15) angepasst ist.

2. Kraftfahrzeug nach Anspruch 1, **dadurch gekennzeichnet, dass** ein innenliegendes Ende (20) der Leuchte bzw. der Leuchteneinheit (14) mit Abstand (B) zum angrenzenden Rand (21) der Kühlluftöffnung (13) verläuft, wogegen das äußere Ende (22) der Leuchte bzw. der Leuchteneinheit (14) relativ nahe an den äußeren Rand (23) der Kühlluftöffnung (13) herangeführt ist.

3. Kraftfahrzeug nach den Ansprüchen 1 und 2, **dadurch gekennzeichnet, dass** die Leuchte bzw. Leuchteneinheit (14) an ihrem außenliegenden Ende (22) einen nach innen gerichteten Einzug (24) gegenüber der Kontur der Verkleidung (10) aufweist.

4. Kraftfahrzeug nach einem der vorangegangenen Ansprüche, **dadurch gekennzeichnet, dass** die Verkleidung (10) aus einem elastischen Kunststoff gefertigt ist und aus einem Außenteil (25) und einem ein- oder mehrteiligen inneren Halterahmen (26) besteht, wobei das Außenteil (25) und der innere Halterahmen (26) über Klipsverbindungen miteinander verbunden sind.

5. Kraftfahrzeug nach einem der vorangegangenen Ansprüche, **dadurch gekennzeichnet, dass** die Leuchte bzw. Leuchteneinheit (14) ein Blinklicht (27) und/oder ein Positionslicht (28) umfasst.

6. Kraftfahrzeug nach einem der vorangegangenen Ansprüche, **dadurch gekennzeichnet, dass** die Leuchte bzw. Leuchteneinheit (14) über eine Steckverbindung (29) und eine Schraubverbindung (30) an der Verkleidung (10) in Lage gehalten ist.

7. Kraftfahrzeug nach Anspruch 6, **dadurch gekennzeichnet, dass** das innenliegende Ende (20) der Leuchte bzw. Leuchteneinheit (14) über eine Steckverbindung (29) mit einem Rippenabschnitt (31) des Außenteils (25) verbunden ist.

8. Kraftfahrzeug nach einem der vorangegangenen Ansprüche, **dadurch gekennzeichnet, dass** das außenliegende Ende (22) der Leuchte bzw. der Leuchteneinheit (14) über eine Schraubverbindung (30) am inneren Halterahmen (26) in Lage gehalten ist.

9. Kraftfahrzeug nach Anspruch 6, **dadurch gekennzeichnet, dass** die Leuchte bzw. die Leuchteneinheit (14) zwischen den beiden endseitigen Befestigungen (29, 30) örtlich an einem aufrechten profilierten Steg (38) des inneren Halterahmens (26) aufliegt.

10. Kraftfahrzeug nach Anspruch 5, **dadurch gekennzeichnet, dass** das Blinklicht (27) in LED-Technik ausgeführt ist.

11. Kraftfahrzeug nach einem der vorangegangenen Ansprüche, **dadurch gekennzeichnet, dass** eine vordere Begrenzungskante (39) der Leuchte bzw. Leuchteneinheit (14) in der Draufsicht gesehen gegenüber der Kontur der Verkleidung (10) geringfügig vorsteht, wodurch bei einem 30° Pendelschlag der erste Berührungspunkt (M) des Pendels (P) nach innen im Bereich der Leuchte(14) bzw. Leuchteneinheit verlagert wird.

## Claims

1. Motor vehicle, in particular passenger vehicle, with an elastic panel (10) which forms the end region of the motor vehicle and on which at least one cooling air opening (13) and a lamp or a lamp unit (14) are provided, wherein at least one elongate rib (15) is arranged on the at least one cooling air opening, **characterized in that** the lamp or the lamp unit (14) is arranged within a laterally outer cooling air opening (13) in the panel (10) and is fastened to the rib (15) which extends within the cooling air opening (13) and runs in the transverse direction of the vehicle, the lamp or the lamp unit (14) being arranged only in a partial region (A) of the longitudinal extent of the rib (15), and the lamp or lamp unit (14) being matched to the cross-sectional shape or the shape profile of the adjacent rib (15).

2. Motor vehicle according to Claim 1, **characterized in that** an inner end (20) of the lamp or the lamp unit (14) runs at a distance (B) from the adjacent edge (21) of the cooling air opening (13) whereas the outer end (22) of the lamp or the lamp unit (14) is brought up relatively close to the outer edge (23) of the cooling air opening (13).

3. Motor vehicle according to Claims 1 and 2, **characterized in that** the outer end (22) of the lamp or lamp unit (14) has an inwardly directed tapered portion (24) in relation to the contour of the panel (10).

4. Motor vehicle according to one of the preceding claims, **characterized in that** the panel (10) is manufactured from a flexible plastic and consists of an outer part (25) and a single- or multi-part inner retaining frame (26), the outer part (25) and the inner retaining frame (26) being connected to each other via clip connections.

5. Motor vehicle according to one of the preceding claims, **characterized in that** the lamp or lamp unit (14) comprises a direction indicator light (27) and/or a position light (28).

6. Motor vehicle according to one of the preceding claims, **characterized in that** the lamp or lamp unit (14) is kept in position on the panel (10) via a plug-in connection (29) and a screw connection (30).

7. Motor vehicle according to Claim 6, **characterized in that** the inner end (20) of the lamp or lamp unit (14) is connected to a rib section (31) of the outer part (25) via a plug-in connection (29).

8. Motor vehicle according to one of the preceding claims, **characterized in that** the outer end (22) of the lamp or lamp unit (14) is kept in position on the inner retaining frame (26) via a screw connection (30).

9. Motor vehicle according to Claim 6, **characterized in that** the lamp or the lamp unit (14) rests locally on an upright profiled web (38) of the inner retaining frame (26) between the two fastenings (29, 30) on the end sides.

10. Motor vehicle according to Claim 5, **characterized in that** the direction indicator light (27) is implemented in LED technology.

11. Motor vehicle according to one of the preceding claims, **characterized in that** a front boundary edge (39) of the lamp or lamp unit (14), as seen in top view, protrudes slightly in relation to the contour of the panel (10), as a result of which, upon a 30° pendulum impact, the first contact point (M) of the pendulum (P) is shifted inwards in the region of the lamp (14) or lamp unit.

## Revendications

1. Véhicule automobile, en particulier véhicule léger, comprenant un habillage élastique (10) formant la partie d'extrémité du véhicule automobile, sur lequel sont prévues au moins une ouverture d'air de refroidissement (13) et une lampe, ou une unité d'éclairage (14), au moins une ailette (15) allongée étant disposée sur l'au moins une ouverture d'air de refroidissement, **caractérisé en ce que** la lampe ou l'unité d'éclairage (14) est disposée à l'intérieur d'une ouverture d'air de refroidissement (13) de l'habillage (10) située latéralement à l'extérieur, et est fixée sur l'ailette (15) s'étendant à l'intérieur de l'ouverture d'air de refroidissement (13) dans la direction transversale du véhicule, la lampe ou l'unité d'éclairage (14) étant disposée seulement dans une partie partielle (A) de l'étendue longitudinale de l'ailette (15) et la lampe ou l'unité d'éclairage (14) étant adaptée à la forme en section transversale ou à l'allure géométrique de l'ailette adjacente (15).

2. Véhicule automobile selon la revendication 1, **caractérisé en ce qu'**une extrémité (20) située à l'intérieur, de la lampe ou de l'unité d'éclairage (14), s'étend à distance (B) du bord adjacent (21) de l'ouverture d'air de refroidissement (13), tandis que l'extrémité extérieure (22) de la lampe ou de l'unité d'éclairage (14) est relativement proche du bord extérieur (23) de l'ouverture d'air de refroidissement (13).

3. Véhicule automobile selon les revendications 1 et 2, **caractérisé en ce que** la lampe ou l'unité d'éclairage (14) présente, sur son extrémité (22) située à l'extérieur, un rentré (24) orienté vers l'intérieur par rapport au contour de l'habillage (10).

4. Véhicule automobile selon l'une quelconque des revendications précédentes, **caractérisé en ce que** l'habillage (10) est fabriqué en un plastique élastique et se compose d'une partie extérieure (25) et d'un cadre de retenue interne (26) en une ou plusieurs parties, la partie extérieure (25) et le cadre de retenue interne (26) étant connectés l'un à l'autre par le biais de connexions par enclipsage.

5. Véhicule automobile selon l'une quelconque des revendications précédentes, **caractérisé en ce que** la lampe ou l'unité d'éclairage (14) comprend un clignotant (27) et/ou un indicateur de position (28).

6. Véhicule automobile selon l'une quelconque des revendications précédentes, **caractérisé en ce que** la lampe ou l'unité d'éclairage (14) est maintenue en position par le biais d'une connexion par enfichage (29) et d'une connexion par vissage (30) sur l'habillage (10).

7. Véhicule automobile selon la revendication 6, **caractérisé en ce que** l'extrémité (20) située à l'intérieur, de la lampe ou de l'unité d'éclairage (14), est connectée par le biais d'une connexion par enfichage (29) à une portion d'ailette (31) de la partie extérieure (25).

8. Véhicule automobile selon l'une quelconque des revendications précédentes, **caractérisé en ce que** l'extrémité (22) située à l'extérieur, de la lampe ou de l'unité d'éclairage (14), est maintenue en position sur le cadre de retenue interne (26) par le biais d'une connexion par vissage (30).

9. Véhicule automobile selon la revendication 6, **caractérisé en ce que** la lampe ou l'unité d'éclairage (14) repose entre les deux fixations du côté de l'extrémité (29, 30) localement sur une nervure profilée droite (38) du cadre de retenue interne (26).

10. Véhicule automobile selon la revendication 5, **caractérisé en ce que** le clignotant (27) est réalisé par une technique DEL.

11. Véhicule automobile selon l'une quelconque des revendications précédentes, **caractérisé en ce qu'**une arête de limitation avant (39) de la lampe ou de l'unité d'éclairage (14), vue de dessus, dépasse légèrement par rapport au contour de l'habillage (10), de sorte que dans le cas d'une oscillation pendulaire de 30°, le premier point de contact (M) du pendule (P) soit décalé vers l'intérieur dans la région de la lampe ou de l'unité d'éclairage (14).
